# DEMANDE DE BREVET EUROPEEN

(11) **EP 1 136 524 A1**
(43) Date de publication de la demande: **26.09.2001**
(21) Numéro de dépôt: 00201031.2
(22) Date de dépôt: 22.03.2000
(51) Int. Cl.: C08K 5/20, C08L 23/04

(54) **Composition à base de polyéthylène et procédé de fabrication d'objets façonnés à partir de cette composition**

(71) Demandeur: SOLVAY POLYOLEFINS EUROPE - BELGIUM (Société Anonyme), 1050 Bruxelles (BE)
(72) Inventeur: Vanden Berghe, Pascal, 1300 Limal (BE); Plume, Denis, 1070 Bruxelles (BE)
(74) Mandataire: Destryker, Elise Martine

(57) **Abrégé**

Composition à base de polyéthylène comprenant de 0,05 à 0,5 % en poids d'au moins un amide d'acide gras saturé contenant de 8 à 30 atomes de carbone, de 0 à 0,15 % en poids d'agent lubrifiant auxiliaire choisi parmi les acides gras, les esters d'acides gras, les sels d'acides gras, les amides d'acides gras mono-insaturés, les polyols contenant au moins 4 atomes de carbone, les monoéthers de mono- ou polyalcool, les esters de glycérol, les paraffines, les polysiloxanes, les polymères fluorés et leurs mélanges, et de 0 à 5 % en poids d'un ou plusieurs additifs choisis parmi les anti-oxydants, les anti-acides, les anti- UV, les colorants, et les agents antistatiques.

## Description

L'invention concerne une composition à base de polyéthylène. Elle concerne également un procédé de fabrication d'objets façonnés, en particulier un procédé de fabrication de capsules à visser pour bouteilles à partir de cette composition.

Il est généralement connu de fabriquer des capsules pour bouteilles à partir de polyéthylène. Afin d'optimiser les propriétés de glissance et de faciliter le dévissage de la capsule, il est également connu d'incorporer, dans le polyéthylène, un agent lubrifiant. Le brevet US 5,948,846 décrit l'utilisation d'une composition comprenant du 13-docosénamide comme agent lubrifiant pour la fabrication de capsules. Cette composition présente toutefois le désavantage de procurer une mauvaise odeur et un mauvais goût aux aliments stockés en contact avec les capsules à base de cette composition. Ce problème a été résolu en ajoutant aux compositions une quantité d'une zéolite particulière en tant que capteur de goût et d'odeur.

On a maintenant trouvé une composition qui ne présente pas les inconvénients précités sans qu'elle ne nécessite l'utilisation d'un capteur d'odeur et de goût tel qu'une zéolite et qui donne de bonnes propriétés de glissance.

A cet effet, l'invention concerne une composition constituée d'au moins 94,5 % en poids de polyéthylène ayant une masse volumique standard supérieure à 940 kg/m³, de 0,05 à 0,5 % en poids d'au moins un amide d'acide gras saturé contenant de 8 à 30 atomes de carbone, de 0 à 0,15 % en poids d'agent lubrifiant auxiliaire choisi parmi les acides gras, les esters d'acides gras, les sels d'acides gras, les amides d'acides gras mono-insaturés, les polyols contenant au moins 4 atomes de carbone, les monoéthers de mono- ou polyalcool, les esters de glycérol, les paraffines, les polysiloxanes, les polymères fluorés et leurs mélanges, et de 0 à 5 % en poids d'un ou plusieurs additifs choisi(s) parmi les anti-oxydants, les anti-UV, les anti-acides, les colorants et les agents antistatiques.

Par polyéthylène, on entend désigner les homopolymères de l'éthylène et les copolymères de l'éthylène avec un ou plusieurs comonomères, ainsi que leurs mélanges. Les comonomères sont habituellement des α-oléfines comprenant de 3 à 12 atomes de carbones. Les comonomères préférés sont le butène-1 et l'hexène-1; le butène-1 est particulièrement préféré. En général, la quantité de comonomère dans le copolymère est au moins égale à 0,01 mol %, en particulier au moins égale à 0,05 mol %, les quantités d'au moins 0,15 mol % étant les plus avantageuses. La quantité de comonomère est habituellement au maximum égale à 5 mol %, plus précisément au maximum égale à 3 mol %, les quantités d'au plus 1 mol % étant recommandées. On obtient des résultats particulièrement performants avec des quantités de comonomère de 0,1 à 0,7 mol %.

Le polyéthylène mis en oeuvre dans la présente invention présente une masse volumique standard (MVS) supérieure à 940 kg/m³. Dans le cadre de la présente invention, la MVS est mesurée selon la norme ISO 1183-3 (1999). Elle est de préférence d'au moins 948 kg/m³. Généralement, la MVS ne dépasse pas 960 kg/m³.

Le plus souvent, le polyéthylène est en outre caractérisé par un indice de fluidité (MI₂), mesuré à 190°C sous une charge de 2,16 kg selon la norme ASTM D 1238 (1998), d'au moins 0,05 g/10 min, en particulier d'au moins 0,1 g/10 min; les valeurs d'au moins 0,2 g/10 min étant les plus courantes. L'indice de fluidité ne dépasse pas, en général, 10 g/10 min, de préférence pas 8 g/10 min; les valeurs d'au plus égales à 5 g/10 min étant recommandées. Les indices de fluidité de 1 à 3 g/10 min , par exemple environ 2 g/10 min sont préférés.

La composition selon l'invention comprend au moins un amide d'acide gras saturé contenant de 8 à 30 atomes de carbone. Les amides d'acides gras saturés sont de préférence les amides d'acides gras linéaires représentés par la formule CH₃(CH₂)ₙ CONH₂ dans laquelle n = 6 à 28. Les amides d'acide gras saturés et linéaires contenant au moins 12 atomes de carbone et leurs mélanges sont recommandés. Le béhénamide est particulièrement préféré.

La teneur en amide d'acide gras saturé dans la composition selon l'invention est de préférence d'au moins 0,07 % en poids, plus particulièrement d'au moins 0,08 % en poids. Généralement, cette teneur ne dépasse pas 0,4 % en poids. De préférence, cette teneur ne dépasse pas 0,35 % en poids.

Outre le polyéthylène et l'amide d'acide gras saturé, la composition selon l'invention peut également contenir de 0 à 0,15 % en poids d'agent lubrifiant auxiliaire choisi parmi les acides gras, les esters d'acides gras, les sels d'acides gras, les amides d'acides gras mono-insaturés, les polyols contenant au moins 4 atomes de carbone, les monoéthers de mono- ou polyalcool, les esters de glycérol, les paraffines, les polysiloxanes, les polymères fluorés et leurs mélanges. Lorsque l'agent lubrifiant auxiliaire est choisi parmi les amides d'acides gras mono-insaturés, les amides d'acides gras mono-insaturés contenant de 8 à 30 atomes de carbone représentés par la formule CH₃(CH₂)ₓCH=CH(CH2)_{y}CONH₂ dans laquelle (x+y)=4 à 26 sont préférés; les amides d'acides gras mono-insaturés contenant au moins 12 atomes de carbone et leurs mélanges sont particulièrement préférés. De bons résultats sont obtenus avec l'érucamide.

La teneur en agent lubrifiant auxiliaire ne dépasse pas 0,15 % en poids. De préférence, cette teneur ne dépasse pas 0,1 % en poids. Selon une variante, la composition selon l'invention est exempte de lubrifiant auxiliaire tel que défini ci-dessus.

La composition selon l'invention peut contenir des additifs usuels tels que les anti-oxydants, les anti-acides, les anti-UV, les colorants et les agents antistatiques. La teneur totale en additifs ne dépasse pas 5 % en poids; elle est de préférence inférieure à 4 % en poids.

Les anti-oxydants mis en oeuvre dans la composition selon l'invention sont généralement choisis parmi les anti-oxydants de type phénol encombré, phosphite, phosphonite et leurs mélanges.

Les anti-oxydants de type phénol encombré peuvent être choisis parmi les phénols substitués en position ortho, les 2,6-dialkylphénols, les bisphénols, les amides de bèta-(3,5-di-t-butyl-4-hydroxyphényl)-acide propionique, les esters de bèta-(3,5-di-t-butyl-4-hydroxyphényl)-acide propionique avec des alcools mono- ou polyvalents. Des exemples d'anti-oxydants de type phénol encombré sont le 2,6-di-t-butylparacrésol, le 3,5-triméthyl-2,4,6-tris(3,5-di-t-butyl-4-hydroxybenzyl)benzène, le tris(3,5-di-t-butyl-4-hydroxybenzyl)isocyanurate, le stéaryl bèta-(3,5-di-t-butyl-4-hydroxyphényl)-propionate, le 2,6-di-t-butyl-4-méthylphénol, le pentaérithrityl tétrakis(3,5-di-t-butyl-4-hydroxyphénylpropionate), le bis(bèta-3,5-di-t-butyl-4-hydroxyphényléthyl)subérate, le N,N'-bis((3-(3',5'-di-t-butyl-4'-hydroxyphényl)-propionyl))hexaméthylènediamine.

Les anti-oxydants de type phosphite sont en général choisis parmi les alkyl- et les arylphosphites, et plus particulièrement parmi les triarylphosphites symétriques. Des exemples d'anti-oxydants de type phosphite sont le tris-(2,4-di-t-butylphényl)phosphite, le tris-(2-t-butyl-4-méthylphényl)-phosphite, le tris-p-nonyl-phénylphosphite, le tris(2,4-dinonylphényl)phophite, le bis(2,4-di-t-butyl)pentaérythritol diphosphite, le distéaryl pentaérythritol diphosphite, le bis(2,4-dicumylphényl)pentaérythritol diphosphite. L'utilisation du tris(2,4-di-t-butyl-phényl)phosphite est très particulièrement recommandée.

Les anti-oxydants de type phosphonite peuvent être choisis parmi les arylphosphonites, les diphosphonites, et plus particulièrement parmi les aryldiphosphonites. Un exemple d'anti-oxydants de type phosphonite est le tétrakis[2,4-di-t-butylphényl]4,4'-biphénylènediphosphonite.

De bons résultats sont obtenus dans le cas où la composition comprend au moins 0,01 % en poids d'anti-oxydants. La teneur en anti-oxydants ne dépasse généralement pas 1,5 % en poids. De préférence, la composition comprend de 0,02 à 0,5 % en poids d'anti-oxydants.

Les anti-acides mis en oeuvre dans la composition selon l'invention peuvent être choisis parmi les sels d'acides gras (tels que le stéarate de sodium, de calcium ou de zinc), les hydrotalcites, les oxydes métalliques (tels que les oxydes de magnésium, de calcium ou de zinc) et leurs mélanges. Le stéarate de calcium est préféré. La teneur en anti-acide est de préférence inférieure à 3 % en poids. Elle est préférentiellement inférieure à 1 % en poids.

Les anti-UV mis en oeuvre dans la composition selon l'invention peuvent être choisis parmi les 2-(2'-hydroxyphényl)-benzotriazoles, les 2-hydroxybenzophénones, les amines encombrées et leurs mélanges. Des exemples de 2-(2'-hydroxyphényl)-benzotriazoles sont le 2-(2'-hydroxy-3',5'-di-t-butylphényl)5-chlorobenzotriazole, le 2-(2'-hydroxy, 3'-t-butyl, 5'-méthylphényl)-5-chlorobenzotriazole, le 2-(2'-hydroxy-3',5'-di-t-amylphényl)benzotriazole . Un exemple de 2-hydroxybenzophénone est le 2-hydroxy-4-n-octoxy-benzophénone. Des exemples d'amines encombrées sont le bis(2,2,6,6,-tetraméthyl-4-piperidyl)sébacate, le polycondensat d'acide succinique et la 1-(2-hydroxyéthyl)-2,2,6,6-tétraméthyl-4-hydroxypipéridine. La teneur en anti-UV est de préférence inférieure à 1 % en poids. Elle est préférentiellement inférieure à 0,5 % en poids.

Les colorants mis en oeuvre dans la composition selon l'invention peuvent être choisis parmi les colorants organiques (tels que les phtalocyanines, les anthraquinones, les mono- et diazos, les diazines, les quinacridones et les indigos) et les colorants inorganiques (tels que les oxydes et les sels métalliques).

Généralement la teneur en colorants ne dépasse pas 4 % en poids. De préférence, leur teneur ne dépasse pas 3,5 % en poids.

Les agents antistatiques mis en oeuvre dans la composition selon l'invention peuvent être choisis parmi les composés cationiques (tels que les sels d'ammonium quaternaires), les composés anioniques (tels que les alkylsulfonates, les alkylsulfates, les alkylphosphates, les dithiocarbamates, les carboxylates de métaux alcalins ou alcalino-terreux), les composés nonioniques (tels que les esters et les éthers de polyéthylène glycol, les esters d'acides gras, les alkylamines éthoxylées, les mono- et diglycérides, les acides gras éthoxylés et leurs mélanges) et leurs mélanges. Les composés nonioniques sont préférés. La teneur en agent antistatique est de préférence inférieure à 3 % en poids. Elle est préférentiellement inférieure à 1 % en poids.

La composition selon l'invention est exempte de zéolites . Elle ne contient pas de glycérine.

La composition selon l'invention peut être obtenue selon tout moyen connu adéquat. On peut par exemple procéder en deux étapes successives, la première consistant à mélanger le polyéthylène, l'amide d'acide gras saturé et éventuellement l'agent lubrifiant auxiliaire et un ou plusieurs additifs à température ambiante, la deuxième étape consistant à poursuivre le mélange en fondu dans une extrudeuse. La température de la deuxième étape est généralement de 100 à 300°C, en particulier de 120 à 250 °C, en plus particulier d'environ 130 à 210 °C. Une méthode alternative consiste à introduire l'amide d'acide gras saturé et éventuellement les autres composés dans le polyéthylène déjà fondu.

On peut aussi préparer, dans un premier temps, un mélange-maître comprenant une première fraction de polyéthylène, l'amide d'acide gras saturé et éventuellement l'agent lubrifiant auxiliaire et les autres additifs, ce mélange-maître étant riche en amide d'acide gras saturé et optionnellement en autres composés. Ce mélange-maître est ensuite mélangé à la fraction restante du polyéthylène, par exemple lors de la fabrication de granules de la composition.

La composition selon l'invention présente à la fois de bonnes propriétés de glissance, qui la rendent apte à être utilisée pour la fabrication de capsules à visser pour bouteilles, et de bonnes propriétés organoleptiques, qui la rendent utilisable dans des applications alimentaires.

La composition selon l'invention convient pour la mise en oeuvre par tous les procédés classiques de fabrication d'objets façonnés en polyéthylène et plus particulièrement par les procédés d'extrusion, d'extrusion-soufflage, d'extrusion-thermoformage et d'injection. Elle donne des résultats particulièrement satisfaisants lors de la fabrication d'objets façonnés par injection, en particulier de capsules à visser pour bouteilles.

Dès lors, la présente invention concerne également un procédé de fabrication d'objets façonnés à partir de la composition selon l'invention, en particulier un procédé de fabrication de capsules pour bouteilles, par injection de cette composition. Selon ce procédé, ladite composition, généralement sous forme de granules, est introduite dans une extrudeuse dans laquelle elle est fondue au moyen d'une unité de plastification. On obtient de bons résultats avec des extrudeuses mono-vis. Les températures du fourreau et de la vis sont généralement comprises entre 100°C et 300°C, particulièrement entre 130°C et 270°C, plus particulièrement entre 200°C et 250°C. Pendant la phase de plastification, la composition selon l'invention à l'état fondu est accumulée devant la pointe de la vis. Ensuite, elle est injectée rapidement dans un moule refroidi. Directement après cette phase de remplissage, la composition est maintenue sous pression afin de compenser son retrait. Après un refroidissement court, les objets façonnés sont éjectés lors de l'ouverture du moule. Les capsules fabriquées par ce procédé conviennent pour être utilisées pour la fermeture de bouteilles, plus particulièrement pour des bouteilles contenant des aliments.

Les exemples dont la description suit, servent à illustrer l'invention.

L'exemple 3 est donné à titre comparatif. La signification des symboles utilisés dans ces exemples, les unités exprimant les grandeurs mentionnées et les méthodes de mesure de ces grandeurs sont explicitées ci-dessous.
- MI₂ =: indice de fluidité du polyéthylène, exprimé en g/10 min, mesuré à 190°C sous une charge de 2,16 kg selon la norme ASTM D 1238 (1998).
- MVS =: masse volumique standard du polyéthylène, exprimé en kg/m³, mesurée selon la norme ISO 1183-3(1999).
- OT =: couple d'ouverture, mesuré selon la méthode suivante :
Dix capsules sont vissées sur des bouteilles en verre de 33 cl à l'aide d'une machine de laboratoire mono tête Zalkin et de façon à fermer les capsules d'un angle de rotation constant de 540° correspondant à 1,5 tours. On mesure le couple de dévissage. La valeur OT est la moyenne des valeurs obtenues sur les dix capsules. Ce test est effectué 1 semaine (OT1) et 3 semaines (OT3) après la fabrication des capsules.
- OI =: indice d'organolepticité, mesuré selon la méthode suivante :
33 g de la composition à base de polyéthylène sous forme de granules sont mis en suspension dans 1 1 d'eau pendant 4 heures à 60°C. Ensuite, 6 opérateurs différents goûtent l'eau de la suspension qui est refroidie à température ambiante et apprécient son goût. Ils donnent chacun une note de 1 à 4 en comparant à un échantillon d'eau ayant subi le même traitement en l'absence de granules ou de plaques, la note de 1 correspondant au goût de cet échantillon d'eau. Une note élevée correspond à un mauvais goût. L'indice d'organolepticité (OI) est la moyenne des notes des 6 opérateurs.
- OIS =: indice d'organolepticité après exposition au soleil, mesuré selon la méthode suivante :
Des bouteilles de 33 cl en verre sont remplies avec de l'eau et munies de capsules injectées 1 semaine auparavant. Ces bouteilles sont exposées pendant 42 heures à 40 °C à 550 Watt/m² au spectre solaire dans un appareil Sun test. Ensuite, le goût de l'eau est testé selon la même méthode que celle décrite ci-dessus pour la détermination de l'OI.

### Exemple 1 (conforme à l'invention)

Dans une extrudeuse, on a mélangé (à 190 °C) et granulé une composition constituée de :
- 99,45 parties en poids de polyéthylène (contenant environ 0,4 % mol de butène-1) caractérisé par un MI₂ de 1,9 g/10 min et une MVS de 952 kg/m³;
- 0,2 partie en poids d'agent anti-acide (stéarate de calcium);
- 0,1 partie en poids d'agent anti-oxydant [tris(2,4-di-t-butylphényl)phosphite];
- 0,1 partie en poids d'agent anti-UV [polycondensat d'acide succinique et la 1-(2-hydroxyéthyl)-2,2,6,6-tétraméthyl-4-hydroxypipéridine];
- 0,2 partie en poids de béhénamide (docosonamide).

Les granules présentaient un OI de 1,3.

Des capsules à visser sont fabriquées par moulage-injection sur une machine Netstal équipée d'un moule à 18 cavités.

Les capsules obtenues à partir de la composition présentaient un OT₁ de 1,98 Nm et un OT₃ de 1,47 Nm. La valeur de OIS mesurée sur des capsules était de 1,7.

### Exemple 2 (conforme à l'invention)

On a répété les opérations de l'exemple 1 en remplaçant le 0,2 partie en poids de béhénamide par un mélange de 0,08 partie en poids d'érucamide (13-docosénamide) et 0,12 partie en poids de béhénamide.

Les granules présentaient un OI de 2,0.

Les capsules à visser obtenues à partir de la composition présentaient un OT₁ de 2,1 Nm et un OT₃ de 1,70 Nm. La valeur de OIS mesurée sur des capsules était de 2,2.

### Exemple 3 (à titre de comparaison)

On a répété les opérations de l'exemple 1 en remplaçant le 0,2 partie en poids de béhénamide par 0,2 partie en poids d'érucamide (13-docosénamide).

Les granules présentaient un OI de 2,7.

Les capsules à visser obtenues à partir de la composition présentaient un OT₁ de 1,64 Nm et un OT₃ de 0,96 Nm. La valeur de OIS mesurée sur des capsules était de 2,7.

Une comparaison des résultats de l'exemple 3 avec ceux des exemples 1 et 2 fait apparaître le progrès apporté par l'invention pour ce qui concerne les propriétés organoleptiques.

## Revendications

1. Composition constituée d'au moins 94,5 % en poids d'un polyéthylène ayant une masse volumique standard supérieure à 940 kg/m³, de 0,05 à 0,5 % en poids d'au moins un amide d'acide gras saturé contenant de 8 à 30 atomes de carbone, de 0 à 0,15 % en poids d'agent lubrifiant auxiliaire choisi parmi les acides gras, les esters d'acides gras, les sels d'acides gras, les amides d'acides gras mono-insaturés, les polyols contenant au moins 4 atomes de carbone, les monoéthers de mono- ou polyalcool, les esters de glycérol, les paraffines, les polysiloxanes, les polymères fluorés et leurs mélanges, et de 0 à 5 % en poids d'un ou plusieurs additifs choisis parmi les anti-oxydants, les anti-acides, les anti- UV, les colorants et les agents antistatiques.

2. Composition selon la revendication 1, dans laquelle l'amide d'acide gras saturé est choisi parmi les amides d'acides gras saturés linéaires contenant au moins 12 atomes de carbone, et leurs mélanges.

3. Composition selon la revendication 2, dans laquelle l'amide d'acide gras est le béhénamide.

4. Composition selon l'une quelconque des revendications 1 à 3, dans laquelle la teneur en amide d'acide gras saturé est d'au moins 0,07 % en poids, et ne dépasse pas 0,4 % en poids.

5. Composition selon l'une quelconque des revendications 1 à 4, dans laquelle le polyéthylène a une masse volumique standard de 948 à 960 kg/m³.

6. Composition selon l'une quelconque des revendications 1 à 5, dans laquelle le polyéthylène a un indice de fluidité MI₂ d'au moins 0,05 g/10 min et qui ne dépasse pas 10 g/10 min.

7. Composition selon l'une quelconque des revendications 1 à 6, dans laquelle la teneur en anti-oxydants est d'au moins 0,01 % en poids.

8. Composition selon l'une quelconque des revendications 1 à 7, dans laquelle l'agent lubrifiant auxiliaire est choisi parmi les amides d'acides gras mono-insaturés contenant de 8 à 30 atomes de carbone.

9. Composition selon l'une quelconque des revendications 1 à 8, dans laquelle la teneur en agent lubrifiant auxiliaire ne dépasse pas 0,1 % en poids.

10. Composition selon l'une quelconque des revendications 1 à 7 exempte d'un agent lubrifiant auxiliaire.

11. Procédé de fabrication d'objets façonnés à partir d'une composition à base de polyéthylène conforme à l'une quelconque des revendications 1 à 10.

12. Procédé selon la revendication 11 appliqué à la fabrication de capsules pour bouteilles par injection.
